(19) 

**Europäisches Patentamt**
**European Patent Office**
**Office européen des brevets**

(11) **EP 4 397 184 B1**

(12) **EUROPÄISCHE PATENTSCHRIFT**

(45) Veröffentlichungstag und Bekanntmachung des Hinweises auf die Patenterteilung:
**13.05.2026  Patentblatt 2026/20**

(21) Anmeldenummer: **23220664.9**

(22) Anmeldetag: **28.12.2023**

(51) Internationale Patentklassifikation (IPC):
**A22B 3/06** (2006.01)    **A22B 3/08** (2006.01)

(52) Gemeinsame Patentklassifikation (CPC):
**A22B 3/086; A22B 3/06**

(54) **VERFAHREN UND VORRICHTUNG ZUM BETÄUBEN VON VÖGELN**

METHOD AND APPARATUS FOR STUNNING BIRDS

PROCÉDÉ ET DISPOSITIF POUR ASSOMMER LES OISEAUX

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **29.12.2022  DE 102022135020**

(43) Veröffentlichungstag der Anmeldung:
**10.07.2024  Patentblatt 2024/28**

(73) Patentinhaber:
- **Hartmann, Florian**
  **87767 Niederrieden (DE)**
- **Hartmann, Christian**
  **87767 Niederrieden (DE)**
- **Hartmann, Martin**
  **87767 Niederrieden (DE)**
- **Serrano Velarde, Carola**
  **87767 Niederrieden (DE)**

(72) Erfinder:
- **Hartmann, Florian**
  **87767 Niederrieden (DE)**
- **Hartmann, Martin**
  **87767 Niederrieden (DE)**
- **Serrano Velarde, Carola**
  **87767 Niederrieden (DE)**
- **Rakow, Rainer**
  **87767 Niederrieden (DE)**

(74) Vertreter: **Patentanwälte Olbricht, Buchhold, Keulertz**
**Partnerschaft mbB**
**Hallhof 6-7**
**87700 Memmingen (DE)**

(56) Entgegenhaltungen:
EP-B1- 0 680 260        WO-A1-97/01284
DE-A1- 4 002 266        DE-T2- 69 215 690
DE-U1- 202015 101 312   NL-C2- 2 002 318

**Beschreibung**

Die vorgestellte Erfindung betrifft ein Verfahren und eine Vorrichtung zum Betäuben von Vögeln gemäß den beigefügten Ansprüchen.

Zur kosteneffizienten Schlachtung großer Mengen an Geflügel sind automatische Schlachtanlagen bekannt. In diesen werden Vögel in eine Bewegungsvorrichtung, wie bspw. ein Förderband eingehängt, das sich kontinuierlich durch verschiedene Stationen einer Schlachtmaschine bewegt, um jeweilige Schritte eines Schlacht- und Verarbeitungsprozesses durchzuführen. Derartige Schlachtanlagen schaffen einen großen Durchsatz an Tieren pro Zeit und weisen einen hohen Automatisierungsgrad auf.

EP 3 066 931 B1 beschreibt eine Schlachtvorrichtung zum Schlachten von Kleintieren, bei der eine Vielzahl Kleintiere durch Anlegen einer Betäubungsspannung betäubt werden. Dabei wird eine vorgegebene Betäubungsspannung verwendet.

In DE 692 15 690 T2 wird eine Vorrichtung zum Durchleiten von elektrischem Strom durch eine Reihe Gegenstände mit variierendem elektrischem Widerstand beschrieben, wobei jeder Gegenstand einen eigenen Stromkreis schließt und mit dem selben elektrischen Strom beaufschlagt wird.

WO 97/01284 beschreibt eine Betäubungsvorrichtung für Geflügel. Die einzelnen Vögel werden dabei kopfüber durch ein Wasserbad gezogen und mit einem elektrischen Strom beaufschlagt, welcher zur Betäubung führt.

In NL 2 002 318 C2 wird ein Apparat zum Anlegen eines Stromes an eine Anzahl von Vögeln beschrieben. Ein Wasserbad und ein elektrisch leitendes Gestänge sind mit einer Spannung beaufschlagt, wobei der Stromkreis durch den Vogel geschlossen wird.

In EP 0 680 260 B1 wird ein Gerät zu Betäubung von Geflügel beschrieben, welches die optimalen Betäubungsparameter für individuelle Vögel in einem Ensemble von zu betäubenden Vögeln in einer Wasserbetäubungsvorrichtung ermittelt und mittels und mittels einer Stromregulierung diese erreicht.

DE 20 2015 101 312 U1 definiert eine elektronische Schlachtvorrichtung, wobei zu schlachtende Tiere einen Stromkreis zwischen einem Gestell und einem vertikal beweglichen Becken schließen.

DE 40 02 266 A1 beschreibt eine Betäubungsvorrichtung für Schweine, wobei durch eine Messung des Körperwiderstandes sichergestellt wird, dass der individuelle Betäubungsstrom bei allen Schlachttieren erreicht wird.

Beim Verwenden einer vorgegebenen Betäubungsspannung kann es zu Situationen kommen, in denen ein jeweiliges Kleintier verkrampft und, dadurch bedingt, nicht dem Verzehr zugeführt werden kann bzw. als Ausschuss endet.

Ferner bedingt eine vorgegebene bzw. unspezifische Betäubungsspannung insbesondere bei kleinen Tieren bzw. Tieren mit geringem elektrischen Widerstand, einen unnötig hohen Energieverbrauch zum Bereitstellen der Betäubungsspannung.

Vor diesem Hintergrund ist es eine Aufgabe der vorgestellten Erfindung, eine energieeffiziente, verlässliche und tierschonende Möglichkeit zum Betäuben einer Vielzahl Vögel bereitzustellen.

Es wird somit gemäß einem ersten Aspekt der vorgestellten Erfindung ein Verfahren zum Betäuben einer Vielzahl Vögel gemäß Anspruch 1 vorgestellt.

Das vorgestellte Verfahren umfasst das Anordnen einer Vielzahl Vögel an einer Bewegungsvorrichtung, wobei die Bewegungsvorrichtung dazu konfiguriert ist, die Vielzahl Vögel auf einer vorgegebenen Bewegungsbahn zu bewegen.

Weiterhin umfasst das vorgestellte Verfahren das Bewegen der Vielzahl Vögel in ein Flüssigkeitsbad, so dass jeweilige Vögel der Vielzahl Vögel sich gleichzeitig in dem Flüssigkeitsbad befinden, das Anlegen eines vorgegebenen elektrischen Sollstroms an einem jeweiligen Vogel der Vielzahl Vögel, indem eine spezifische Betäubungsspannung an dem jeweiligen Vogel eingestellt wird, wobei die Betäubungsspannung derart eingestellt wird, dass der jeweilige Vogel mit dem vorgegebenen elektrischen Sollstrom in einem vorgegebenen Zeitraum betäubt wird, und wobei die Betäubungsspannung fortlaufend in dem vorgegebenen Zeitraum eingestellt wird.

Erfindungsgemäß ist vorgesehen, dass das Verfahren das Validieren, ob ein Kopf eines jeweiligen Vogels nach dem Bewegen der Vielzahl Vögel in das Flüssigkeitsbad sicher mit in dem Flüssigkeitsbad befindlicher Flüssigkeit bedeckt ist und das Freigeben des Anlegens der Betäubungsspannung bzw. des Sollstroms an dem jeweiligen Vogel lediglich für den Fall, dass das Validieren zu einem positiven Resultat führt, umfasst.

Dabei ist vorgesehen, dass das Validieren zu einem positiven Resultat führt, wenn mittels eines Positionssensors erkannt wird, dass ein Befestigungselement, an dem der jeweilige Vogel mit der Bewegungsvorrichtung verbunden ist, sich in einer vorgegebenen Position relativ zu dem Flüssigkeitsbad befindet.

Das vorgestellte Verfahren wird insbesondere vollautomatisch mittels einer möglichen Ausgestaltung der vorgestellten Vorrichtung ausgeführt.

Die vorgestellte Erfindung basiert auf dem Prinzip, dass eine Vielzahl Vögel gleichzeitig betäubt wird, wobei für jeden einzelnen Vogel eine spezifische Betäubungsspannung eingestellt wird, um einen vorgegebenen Betäubungsstrom, d.h. einen Sollstrom einzuregeln, so dass jeder einzelne Vogel individuell und verlässlich betäubt wird ohne aufgrund zu hoher Spannung zu krampfen.

Das erfindungsgemäße Einstellen der Betäubungsspannung erfolgt in einem vorgegebenen Zeitraum, wie bspw. einer Sekunde, fortlaufend, so dass bspw. ausgehend von einer vorgegebenen unteren Startspannung die Betäubungsspannung sukzessive erhöht wird, bis der vorgegebene Sollstrom erreicht ist. Entsprechend wird die Betäubungsspannung als Stellgröße zum Einstellen des Sollstroms bei einem durch einen jeweiligen Vogel vorgegebenen elektrischen Widerstand verwendet.

Es kann vorgesehen sein, dass das Verfahren weiterhin das Dokumentieren einer an einem jeweiligen Vogel angelegten Betäubungsspannung umfasst.

Durch eine Dokumentation einer an einem jeweiligen Vogel angelegten Betäubungsspannung bzw. eines Verlaufs der Betäubungsspannung in bspw. einer Datei bzw. einem Speicher einer Recheneinheit, kann ein Betäubungsvorgang des Vogels nachvollzogen werden.

Es kann weiterhin vorgesehen sein, dass das Verfahren das Anlegen einer Messspannung an einem jeweiligen Vogel der Vielzahl Vögel und das Ermitteln eines spezifischen elektrischen Widerstands des jeweiligen Vogels anhand der an dem jeweiligen Vogel angelegten Messspannung umfasst, wobei der spezifische elektrische Widerstand fortlaufend während eines Betäubungsvorgangs ermittelt und zum Einstellen der Betäubungsspannung verwendet wird.

Zum Bestimmen des spezifischen elektrischen Widerstands des jeweiligen Vogels kann bei einer bekannten Messspannung und bekannter elektrischer Stromstärke das Ohmsche Gesetz verwendet werden, so dass Formel (1) gilt, wobei "$R_{spez}$" dem spezifischen elektrischen Widerstand des Vogels, "$U_{Mess}$" der vorgegebenen Messspannung und "$I$" einer jeweiligen Stromstärke entspricht.

$$R_{spez}=U_{Mess}/I \qquad (1)$$

Es kann weiterhin vorgesehen sein, dass die Messspannung zwischen 2 Volt und 12 Volt, insbesondere 4 Volt beträgt.

Eine Messspannung von 4 Volt hat sich in Versuchen als besonders geeignet zum Bestimmen des spezifischen elektrischen Widerstands eines Vogels erwiesen.

Bspw. kann der Positionssensor ein Ultraschallsensor oder ein Induktionssensor sein.

Mittels eines Induktionssensors kann bspw. eine Position eines induktiven Elements an der Bewegungsvorrichtung erkannt werden, die einen Hinweis auf eine Position eines jeweiligen Vogels gibt.

Mittels eines Ultraschallsensors kann bspw. ein Echosignal eines Ultraschallsignals ausgewertet werden, so dass zwischen einem ersten Zustand, in dem das Ultraschallsignal aufgrund eines fehlenden Vogels eine lange Laufzeit hat oder einem zweiten Zustand, in dem das Ultraschallsignal aufgrund eines reflektierenden Vogels eine kurze Laufzeit hat, unterschieden werden kann.

Alternativ kann vorgesehen sein, dass das Validieren zu einem positiven Resultat führt, wenn ein spezifischer elektrischer Widerstand eines jeweiligen Vogels, der anhand eines an dem jeweiligen Vogel mit der vorgegebenen Messspannung angelegten vorgegebenen Messstroms bestimmt wird, unter oder über einem vorgegebenen Schellenwert liegt.

Es kann weiterhin vorgesehen sein, dass ein Betäubungsstrom, der an einem jeweiligen Vogel angelegt wird, mit einer Betäubungsfrequenz eingestellt wird, die ausgehend von einem Startwert während eines Betäubungsvorgangs abgesenkt wird.

Eine Absenkung der Frequenz des Betäubungsstroms während eines Betäubungsvorgangs eines jeweiligen Vogels führt dazu, dass der Sollstrom schnell, d.h. mit hoher Frequenz eingestellt wird, so dass der Vogel schnell betäubt wird und dann lange gehalten wird, um die Betäubung sicherzustellen. Entsprechend wird eine Phase, in der der Vogel den Betäubungsstrom wahrnehmen kann, minimiert.

Es kann weiterhin vorgesehen sein, dass an einem jeweiligen Vogel ein elektrischer Strom angelegt wird, indem an der Bewegungsvorrichtung in einem Kontaktbereich mit dem Vogel elektrischer Strom angelegt wird.

Ein elektrischer Leiter, wie bspw. ein metallischer Kontakt, kann direkt mit einem jeweiligen Vogel in elektrischen Kontakt gebracht werden oder über einen elektrischen Leiter, wie bspw. eine Metallschiene oder eine Flüssigkeit mit dem Vogel in elektrischen Kontakt gebracht werden. Dazu kann der elektrische Leiter bspw. beweglich ausgeführt sein, um einen Stromfluss durch den Vogel zu steuern, insbesondere zeitlich zu begrenzen.

Es kann weiterhin vorgesehen sein, dass der elektrische Leiter zunächst mit dem Vogel in elektrischen Kontakt gebracht und anschließend der Vogel in das Flüssigkeitsbad bewegt wird.

Es kann weiterhin vorgesehen sein, dass der elektrische Leiter mit dem Vogel in Kontakt gebracht wird, während der Vogel in das Flüssigkeitsbad bewegt wird.

Es kann weiterhin vorgesehen sein, dass der Vogel zuerst in das Flüssigkeitsbad bewegt und anschließend der elektrische Leiter mit dem Vogel in elektrischen Kontakt gebracht wird.

Der elektrische Kontakt zwischen dem elektrischen Leiter und dem Vogel kann vor, nach oder während des Bewegens des Vogels in das Flüssigkeitsbad erfolgen, so dass ein Stromfluss durch den Kopf des Vogels stets sichergestellt ist.

Es kann weiterhin vorgesehen sein, dass die Bewegungsvorrichtung zum Einleiten von elektrischem Strom und ein jeweiliger Vogel oder das Flüssigkeitsbad zum Ableiten des elektrischen Stroms verwendet werden.

Die Verwendung der Bewegungsvorrichtung zum Einleiten von elektrischem Strom ermöglicht das Erden des Flüssigkeitsbades, so dass dieses gefahrlos von einem Nutzer berührt werden kann.

Alternativ kann vorgesehen sein, dass die Bewegungsvorrichtung zum Ableiten von elektrischem Strom und ein jeweiliger Vogel oder das Flüssigkeitsbad zum Einleiten des elektrischen Stroms verwendet werden.

Die Verwendung der Bewegungsvorrichtung zum Ableiten von elektrischem Strom ermöglicht das Erden der Bewegungsvorrichtung, so dass diese gefahrlos von einem Nutzer berührt werden kann.

Es kann vorgesehen sein, dass das Verfahren weiterhin das Schlachten des Vogels in einem vorgegebenen Zeitraum, nachdem die Betäubungsspannung an dem Vogel angelegt wurde, umfasst.

Um ein Aufwachen eines jeweiligen Vogels nach einer Betäubung durch die Betäubungsspannung zu verhindern, kann der Vogel in einem vorgegebenen Zeitraum von bspw. 15 Sekunden geschlachtet werden, indem der Vogel bspw. einer Schlachtvorrichtung zugeführt wird.

Es kann weiterhin vorgesehen sein, dass jeweilige Vögel an der Bewegungsvorrichtung voneinander elektrisch isoliert sind.

Durch eine elektrische Isolierung verschiedener Vögel voneinander wird sichergestellt, dass eine jeweilige Betäubungsspannung nur an einem jeweiligen Vogel angelegt wird. Dies bedeutet, dass ein Abfließen des Betäubungsstroms zu einem weiteren Vogel verhindert wird.

Es kann weiterhin vorgesehen sein, dass die Betäubungsspannung mit einer Frequenz des Betäubungsstroms wiederholt eingestellt wird.

Durch ein schnelles Einstellen bzw. Einregeln der Betäubungsspannung bei jeder Sinuswelle eines Betäubungsstroms durch Wechselstrom kann der vorgegebene Sollstrom schnell erreicht werden.

Gemäß einem zweiten Aspekt betrifft die vorgestellten Erfindung eine Vorrichtung zum Betäuben eines Vogels mit den technischen Merkmalen des unabhängigen Anspruchs 12.

Die vorgestellte Vorrichtung umfasst ein Flüssigkeitsbad, eine Bewegungsvorrichtung, die dazu konfiguriert ist, einen Vogel derart auf einer vorgegebenen Bewegungsbahn zu bewegen, dass zumindest ein Kopf des Vogels von in dem Flüssigkeitsbad befindlicher Flüssigkeit umgeben ist, eine elektrische Kontaktierungsvorrichtung, die dazu konfiguriert ist, eine Spannung an dem Vogel anzulegen und eine Recheneinheit, die dazu konfiguriert ist, eine mögliche Ausgestaltung des vorgestellten Verfahrens auszuführen.

Unter einer Recheneinheit ist im Kontext der vorgestellten Erfindung ein Computer, ein Prozessor, ein Steuergerät oder jeder weitere programmierbare Schaltkreis zu verstehen.

Es kann vorgesehen sein, dass die Vorrichtung eine elektrische Kontaktierungsvorrichtung umfasst, die dazu konfiguriert ist, jeweilige Vögel der Vielzahl in dem Flüssigkeitsbad angeordneter Vögel gleichzeitig mit einer für einen jeweiligen Vogel bestimmten spezifischen Betäubungsspannung zu beaufschlagen, so dass an jedem einzelnen Vogel der Vielzahl Vögel eine individuelle spezifische Betäubungsspannung anliegt und die spezifische Betäubungsspannung für jeden einzelnen Vogel zu dokumentieren.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

Fig. 1    eine mögliche Ausgestaltung des vorgestellten Verfahrens,

Fig. 2    eine mögliche Ausgestaltung der vorgestellten Vorrichtung,

Fig. 3    eine weitere Darstellung der Vorrichtung gemäß Fig. 2.

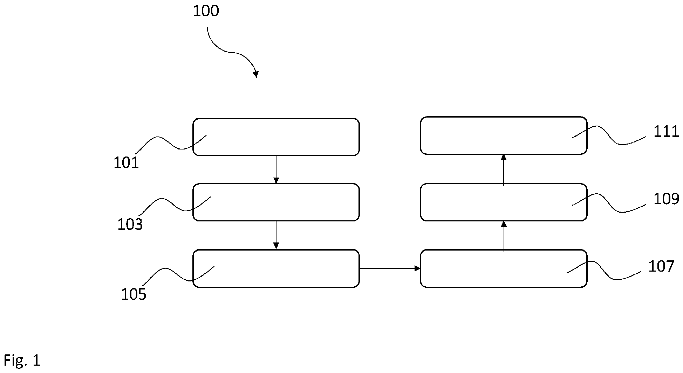

In Fig. 1 ist ein Verfahren 100 zum Betäuben eines Vogels dargestellt. Das Verfahren 100 umfasst einen Anordnungsschritt 101, bei dem ein Vogel an einer Bewegungsvorrichtung angeordnet wird, wobei die Bewegungsvorrichtung dazu konfiguriert ist, den Vogel auf einer vorgegebenen Bewegungsbahn zu bewegen, einen Bewegungsschritt 103, bei dem der Vogels in ein Flüssigkeitsbad bewegt wird, so dass zumindest ein Kopf des Vogels mit in dem Flüssigkeitsbad befindlicher Flüssigkeit bedeckt ist, und einen Anlegeschritt 105, bei dem eine vorgegebener elektrischer Sollstroms an einem jeweiligen Vogel der Vielzahl Vögel angelegt wird, indem eine spezifische Betäubungsspannung an dem jeweiligen Vogel eingestellt wird, wobei die Betäubungsspannung derart eingestellt wird, dass der jeweilige Vogel mit dem vorgegebenen elektrischen Sollstrom in einem vorgegebenen Zeitraum betäubt wird. Dabei wird die Betäubungsspannung fortlaufend in dem vorgegebenen Zeitraum eingestellt.

Optional umfasst das Verfahren 100 einen Dokumentationsschritt 107, bei dem eine an einem jeweiligen Vogel angelegte Betäubungsspannung dokumentiert wird.

Weiter optional umfasst das Verfahren 100 einen Messschritt 109, bei dem eine Messspannung an einem jeweiligen Vogel der Vielzahl Vögel angelegt wird, und einen Ermittlungsschritt 111, bei dem ein spezifischer elektrischer Widerstand des jeweiligen Vogels anhand der an dem jeweiligen Vogel angelegten Messspannung ermittelt wird. Dabei wird der spezifische elektrische Widerstand fortlaufend während eines Betäubungsvorgangs ermittelt und zum Einstellen der Betäubungsspannung verwendet.

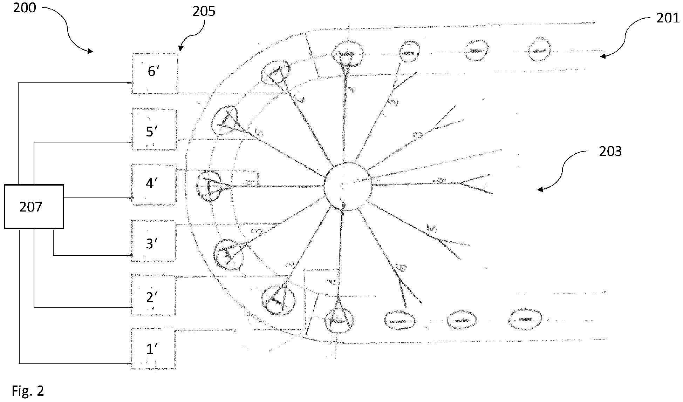

In Fig. 2 ist eine Vorrichtung 200 zum Betäuben eines Vogels dargestellt. Die Vorrichtung 200 umfasst ein Flüssigkeitsbad 201, eine Bewegungsvorrichtung 203, die dazu konfiguriert ist, eine Vielzahl Vögel derart auf einer vorgegebenen Bewegungsbahn zu bewegen, dass ein Kopf eines jeweiligen Vogels von in dem Flüssigkeitsbad 201 befindlicher Flüssigkeit umgeben ist, eine elektrische Kontaktierungsvorrichtung 205, die dazu konfiguriert ist, eine Spannung an einem jeweiligen Vogel anzulegen und eine Steuerungseinrichtung 207, die dazu konfiguriert ist, das Verfahren 100 gemäß Fig. 1 auszuführen.

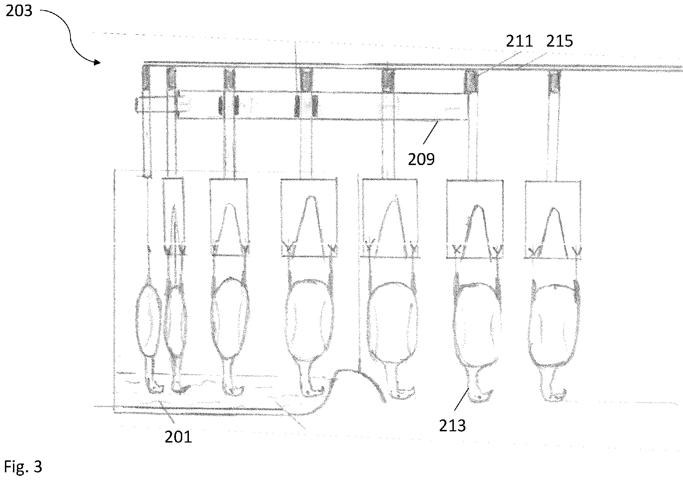

Vorliegend umfasst die elektrische Kontaktierungsvorrichtung 205 eine Vielzahl Stromschienen 209, die in Figur 3 im Detail dargestellt sind und Betäubungsmodule 1' bis 6', die jeweils dazu konfiguriert sind, einen jeweiligen Vogel mit einer spezifischen Betäubungsspannung zu beaufschlagen. Bspw. können die Betäubungsmodule 1' bis 6' als Spannungsquellen ausgestaltet sein, die eine jeweilige Stromschiene zu einem jeweiligen Vogelhalter 1 bis 6 mit einer spezifischen, durch die Recheneinheit 207 ermittelten Betäubungsspannung beaufschlagt.

Entsprechend steuert bzw. regelt die Recheneinheit 207 die Betäubungsmodule 1' bis 6', um an den Vogelhaltern 1 bis 6 angeordnete Vögel mit einem vorgegebenen Sollstrom bzw. Betäubungsstrom in einem vorgegebenen Zeitraum zu betäuben. Ein von der Recheneinheit ermittelter bzw. durch ein jeweiliges Betäubungsmodul 1' bis 6' bereitgestellter Betäubungsspannungsverlauf kann durch die Recheneinheit 207 bspw. in einem Speicher hinterlegt bzw. dokumentiert werden.

Ferner ist die Bewegungsvorrichtung 203 vorliegend als Karussell ausgestaltet, so dass fortlaufend Vögel an freien Vogelhaltern angeordnet werden können und die Betäubungsmodule 1' bis 6' die Vogelhalter 1 bis 6 entsprechend bestromen, wenn diese in ihrer vorgegebenen Position sind.

In Fig. 3 ist die Bewegungsvorrichtung 203 im Detail dargestellt. Hier sind die Stromschienen 209 und Isolatoren 211 zum elektrischen Isolieren jeweiliger Vögel 213 untereinander zu erkennen.

Nach der Betäubung durch die Vorrichtung 200 werden die Vögel 213 am Schlachtband 215 einer Schlachtvorrichtung zugeführt.

Die Erfindung ist nicht auf eine der vorbeschriebenen Ausführungsformen beschränkt, sondern in vielfältiger Weise abwandelbar.

So kann eine (nicht näher dargestellte) Vorrichtung 200 eine Bewegungsvorrichtung 203 aufweisen, welche die zu betäubenden Vögel 213 drei separaten Spuren zuführt, wobei jeder Spur eine eigene und unabhängige Steuerungsvorrichtung 207 zugeordnet ist. Jeder Spur ist zudem je ein Sensor und ein Auslöser zugeordnet, so dass gleichzeitig drei Tiere individuell betäubt werden können.

Eine Spur besteht aus zwei parallel liegenden Metallschienen, in die ein Haken mit je einem Kontaktelement einläuft. Der Sensor erfasst, ob an einem Haken der Bewegungsvorrichtung 203 ein Vogel 213 eingehängt ist.

Der Pluspol (Masse) liegt am Flüssigkeitsbad 201 an, das zweckmäßig als Wasserbecken ausgebildet ist. Der Minuspol liegt an den Metallschienen an.

Das Kontaktelement am Haken dient als "Schalter", wobei das Kontaktelement in den Auslöser der jeweils zugeordneten Steuerungsvorrichtung 207 einläuft. In der Steuerungsvorrichtung 207 wird vorher die Tierart vorgewählt (Huhn, Ente, Pute, u.dgl.).

Setzt sich die Vorrichtung 200 in Bewegung und sind in den Haken Vögel eingehängt, läuft der jeweilige Haken mit seinem Kontaktelement zwischen die Metallschienen einer zugeordneten Spur und stellt dadurch den Kontakt her. Gleichzeitig taucht der Vogel mit dem Kopf ins Wasser.

Der elektrische Kontakt wird aktiviert. Der tatsächliche Widerstand des Tieres wird mit Niederspannung (vorzugsweise 4 V) individuell gemessen.

Anschließend läuft der Haken an einem der (nicht näher bezeichneten) Sensoren vorbei, welche die jeweils zugeordnete Steuerungsvorrichtung 207, welche den nun auf das jeweilige Tier angepassten Betäubungsvorgang unter Anlegen einer Hochspannung ausführt. Dabei werden anhand des gemessenen tatsächlichen Widerstands des Vogels 213 benötigte Stromstärke und Frequenz sowie Frequenzverlauf der Hochspannung eingestellt, wobei die Stromstärke während des Betäubungsvorganges auf einen Sollwert geregelt wird (Überspannung), und wobei der Anfang und das Ende des Frequenzverlaufs festgelegt wird. Auf diese Weise wird jeder Vogel stets sicher und zuverlässig betäubt.

Die elektrischen Werte werden erfasst und für den Nachweis eines ordnungsgemäßen Betäubungsvorgangs von der Steuerungsvorrichtung 207 oder einem externen Gerät aufgezeichnet.

Wenn kein Vogel 2013 im Haken hängt, ist der Widerstand bei der Widerstandsmessung unendlich hoch und der Sensor löst keinen Betäubungsvorgang aus.

Mit dem skizzierten Aufbau können drei Vögel 213 parallel betäubt werden, wobei der Betäubungsvorgang vorzugsweise für jedes Tier einzeln nacheinander ausgelöst wird, z.B. im Abstand von 1 bis 2 Sekunden. Die Zahl der Spuren lässt sich jedoch bei Bedarf anpassen, z.B. auf 6 bis 9 oder - je nach verfügbarem Platzangebot - noch mehr.

Ein wichtiger Aspekt der Erfindung besteht mithin in der individuellen Erfassung des tatsächlichen elektrischen Widerstands eines jeden Vogels, der individuell und tierschutzgerecht betäubt wird.

Ein weiterer wichtiger Aspekt der Erfindung besteht in der mehrspurigen Ausbildung der Vorrichtung, die damit einen hohen Durchsatz ermöglicht.

**Bezugszeichenliste**

| | |
|---|---|
| 1 bis 6 | Vogelhalter |
| 1' bis 6' | Betäubungsmodul |
| 100 | Verfahren |
| 101 | Anordnungsschritt |
| 103 | Bewegungsschritt |

105      Anlegeschritt
107      Dokumentationsschritt
109      Messschritt
111      Ermittlungsschritt
200      Vorrichtung
201      Flüssigkeitsbad
203      Bewegungsvorrichtung
205      Kontaktierungsvorrichtung
207      Steuerungsvorrichtung
209      Stromschiene
211      Isolator
213      Vogel
215      Schlachtband

**Patentansprüche**

1. Verfahren (100) zum Betäuben einer Vielzahl Vögel (213), wobei das Verfahren (100) umfasst:

   ▪ Anordnen (101) einer Vielzahl Vögel (213) an einer Bewegungsvorrichtung (203), wobei die Bewegungsvorrichtung (203) dazu konfiguriert ist, die Vielzahl Vögel (213) auf einer vorgegebenen Bewegungsbahn zu bewegen,
   ▪ Bewegen (103) der Vielzahl Vögel in ein Flüssigkeitsbad (201), so dass die Vielzahl Vögel (213) sich gleichzeitig in dem Flüssigkeitsbad befinden,
   ▪ Anlegen (105) eines vorgegebenen elektrischen Sollstroms an einem jeweiligen Vogel (213) der Vielzahl Vögel (213), indem eine spezifische Betäubungsspannung an dem jeweiligen Vogel (213) eingestellt wird, wobei die Betäubungsspannung derart eingestellt wird, dass der jeweilige Vogel (213) mit dem vorgegebenen elektrischen Sollstrom in einem vorgegebenen Zeitraum betäubt wird, und
   ▪ wobei die Betäubungsspannung fortlaufend in dem vorgegebenen Zeitraum eingestellt wird,

   **dadurch gekennzeichnet, dass** das Verfahren (100) weiterhin umfasst:

   ▪ Validieren, ob ein Kopf eines jeweiligen Vogels (213) nach dem Bewegen der Vielzahl Vögel (213) in das Flüssigkeitsbad (201) sicher mit in dem Flüssigkeitsbad (201) befindlicher Flüssigkeit bedeckt ist,
   ▪ Freigeben des Anlegens der Betäubungsspannung an dem jeweiligen Vogel (213) lediglich für den Fall, dass das Validieren zu einem positiven Resultat führt,
   ▪ wobei das Validieren zu einem positiven Resultat führt, wenn mittels eines Positionssensors erkannt wird, dass ein Befestigungselement (1 bis 6), an dem der jeweilige Vogel (213) mit der Bewegungsvorrichtung (203) verbunden ist, sich in einer vorgegebenen Position relativ zu dem Flüssigkeitsbad (201) befindet.

2. Verfahren (100) nach Anspruch 1, **dadurch gekennzeichnet, dass** das Verfahren (100) weiterhin umfasst:

   ▪ Dokumentieren (107) einer an einem jeweiligen Vogel (213) angelegten Betäubungsspannung.

3. Verfahren (100) nach Anspruch 1, **dadurch gekennzeichnet, dass** das Verfahren (100) weiterhin umfasst:

   ▪ Anlegen (109) einer Messspannung an einem jeweiligen Vogel (213) der Vielzahl Vögel (213),
   ▪ Ermitteln (111) eines spezifischen elektrischen Widerstands des jeweiligen Vogels (213) anhand der an dem jeweiligen Vogel (213) angelegten Messspannung, wobei der spezifische elektrische Widerstand fortlaufend während eines Betäubungsvorgangs ermittelt und zum Einstellen der Betäubungsspannung verwendet wird.

4. Verfahren (100) nach Anspruch 3, **dadurch gekennzeichnet, dass** die Messspannung zwischen 2 Volt und 12 Volt, insbesondere 4 Volt beträgt.

5. Verfahren (100) nach einem der Ansprüche 1 bis 4, **dadurch gekennzeichnet, dass** das Validieren zu einem positiven Resultat führt, wenn ein spezifischer elektrischer Widerstand eines jeweiligen Vogels (213), der anhand eines an dem jeweiligen Vogel (213) mit der vorgegebenen Messspannung angelegten vorgegebenen Messstroms bestimmt wird, unter oder über einem vorgegebenen Schellenwert liegt.

6. Verfahren (100) nach einem der voranstehenden Ansprüche, **dadurch gekennzeichnet, dass** ein Betäubungsstrom, der an einem jeweiligen Vogel (213) angelegt wird, mit einer Betäubungsfrequenz eingestellt wird, die ausgehend von einem Startwert während eines Betäubungsvorgangs abgesenkt wird.

7. Verfahren (100) nach einem der voranstehenden Ansprüche, **dadurch gekennzeichnet, dass** an einem jeweiligen Vogel (213) ein elektrischer Strom angelegt wird, indem an der Bewegungsvorrichtung (203) in einem Kontaktbereich mit dem Vogel (213) elektrischer Strom angelegt wird.

8. Verfahren (100) nach einem der voranstehenden Ansprüche, **dadurch gekennzeichnet, dass** an einem jeweiligen Vogel (213) zunächst ein elektrischer Strom angelegt wird und der jeweilige Vogel (213) anschließend, mit angelegtem elektrischem Strom, in das Flüssigkeitsbad (201) bewegt wird.

9. Verfahren (100) nach einem der Ansprüche 1 bis 8, **dadurch gekennzeichnet, dass** während ein jeweiliger Vogel (213) in das Flüssigkeitsbad (201) bewegt wird ein elektrischer Strom an dem jeweiligen Vogel (213) angelegt wird.

10. Verfahren (100) nach einem der Ansprüche 1 bis 8, **dadurch gekennzeichnet, dass** ein jeweiliger Vogel (213) zuerst in das Flüssigkeitsbad (201) bewegt und anschließend ein elektrischer Strom an dem jeweiligen Vogel (213) angelegt wird.

11. Verfahren (100) nach einem der voranstehenden Ansprüche, **dadurch gekennzeichnet, dass** die Bewegungsvorrichtung (203) zum Einleiten von elektrischem Strom und ein jeweiliger Vogel (213) oder das Flüssigkeitsbad (201) zum Ableiten des elektrischen Stroms verwendet werden, oder, dass die Bewegungsvorrichtung (203) zum Ableiten von elektrischem Strom und ein jeweiliger Vogel (213) oder das Flüssigkeitsbad (201) zum Einleiten des elektrischen Stroms verwendet werden.

12. Vorrichtung (200) zum Betäuben einer Vielzahl Vögel, wobei die Vorrichtung (200) umfasst:

■ ein Flüssigkeitsbad (201),
■ eine Bewegungsvorrichtung (203), die dazu konfiguriert ist, eine Vielzahl Vögel (213) derart auf einer vorgegebenen Bewegungsbahn zu bewegen, dass ein Kopf eines jeweiligen Vogels (213) der Vielzahl Vögel (213) von in dem Flüssigkeitsbad (201) befindlicher Flüssigkeit umgeben ist,
■ eine elektrische Kontaktierungsvorrichtung (205), die dazu konfiguriert ist, einen elektrischen Strom an einem jeweiligen Vogel (213) anzulegen,
■ eine Recheneinheit (207), die dazu konfiguriert ist, ein Verfahren (100) nach einem der Ansprüche 1 bis 11 auszuführen.

13. Vorrichtung (200) nach Anspruch 12, **dadurch gekennzeichnet, dass** die Vorrichtung eine elektrische Kontaktierungsvorrichtung (205) umfasst, die dazu konfiguriert ist, jeweilige Vögel (213) der Vielzahl in dem Flüssigkeitsbad (201) angeordneter Vögel (213) gleichzeitig mit einer für einen jeweiligen Vogel (213) bestimmten spezifischen Betäubungsspannung zu beaufschlagen, so dass an jedem einzelnen Vogel (213) der Vielzahl Vögel (213) eine individuelle spezifische Betäubungsspannung anliegt und die spezifische Betäubungsspannung für jeden einzelnen Vogel zu dokumentieren.

**Claims**

1. Method (100) for stunning a plurality of birds (213), the method (100) comprising:

■ Positioning (101) a plurality of birds (213) on a movement device (203), wherein the movement device (203) is configured to transport the plurality of birds (213) along a predetermined path of movement,
■ Transporting (103) the plurality of birds into a liquid bath (201) such that the plurality of birds (213) are in the liquid bath at the same time,
■ applying (105) a predetermined electrical target current to a respective bird (213) of the plurality of birds (213), by adjusting a specific stunning voltage to the respective bird (213), wherein the stunning voltage is adjusted such that the respective bird (213) is stunned with the predetermined electrical target current during a predetermined period of time, and
■ wherein the stunning voltage is continuously adjusted during the predetermined period of time,

**characterized in that** the method (100) further comprises:

■ validating whether the head of a respective bird (213) is securely covered with liquid located in the liquid bath (201) after transporting the plurality of birds (213) into the liquid bath (201)
■ releasing the application of the stunning voltage to the respective bird (213) only if the validation yields a positive result,
■ the validation results in a positive outcome when a position sensor detects that a fastening element connecting the respective bird (213) to the movement device (203) is in a predetermined position relative to the liquid bath (201).

2. Method (100) according to claim 1, **characterized in that** the method (100) further comprises:

■ documenting (107) a stunning voltage applied to a respective bird (213).

3. Method (100) according to claim 1, **characterized in that** the method (100) further comprises:

■ applying (109) a measurement voltage to a respective bird (213) of the plurality of birds (213),
■ determining (111) a specific electrical resistance of the respective bird (213) on the basis of the measurement voltage applied to the respective bird (213), wherein the specific electrical resistance is continuously determined during a stunning process and used to adjust the stunning voltage.

4. Method (100) according to claim 3, **characterized in that** the measurement voltage is between 2 volts and 12 volts, in particular 4 volts.

5. Method (100) according to one of claims 1 to 4, **characterized in that** the validation results in a positive outcome if a specific electrical resistance of a respective bird (213), which is determined on the basis of a predetermined measurement current applied to the respective bird (213) with the predetermined measurement voltage, is below or above a predetermined threshold level.

6. Method (100) according to one of the preceding claims, **characterized in that** a stunning current applied to a respective bird (213) is adjusted to a stunning frequency which is reduced during a stunning process on the basis of a start value.

7. Method (100) according to one of the preceding claims, **characterized in that** an electric current is applied to a respective bird (213) by applying electric current to the movement device (203) in a contact area with the bird (213).

8. Method (100) according to one of the preceding claims, **characterized in that** an electric current is first applied to a respective bird (213) and the respective bird (213) is then transported into the liquid bath (201) with the electric current applied.

9. Method (100) according to one of claims 1 to 8, **characterized in that** while a respective bird (213) is transported into the liquid bath (201), an electric current is applied to the respective bird (213).

10. Method (100) according to one of claims 1 to 8, **characterized in that** a respective bird (213) is first transported into the liquid bath (201) and then an electric current is applied to the respective bird (213).

11. Method (100) according to one of the preceding claims, **characterized in that** the movement device (203) for introducing electric current and a respective bird (213) or the liquid bath (201) are used to discharge the electric current or that the movement device (203) for discharging electric current and a respective bird (213) or the liquid bath (201) are used to introduce the electric current.

12. Device (200) for stunning a plurality of birds, the device (200) comprising:

- a liquid bath (201),
- a movement device (203) configured to transport a plurality of birds (213) on a predetermined path of movement such that the head of a respective bird (213) of the plurality of birds (213) is surrounded by a liquid located in the liquid bath (201),
- an electrical contacting device (205) configured to apply an electric current to a respective bird (213),
- a computing unit (207) configured to execute a method (100) according to one of claims 1 to 11.

13. Device (200) according to claim 12, **characterized in that** the device comprises an electrical contacting device (205) configured to simultaneously apply a specific stunning voltage intended for a respective bird (213) to respective birds (213) of the plurality of birds positioned in the liquid bath (201) so that an individual specific stunning voltage is applied to each individual bird (213) of the plurality of birds (213), and to document the specific stunning voltage for each individual bird.

**Revendications**

1. Procédé (100) pour étourdir une pluralité d'oiseaux (213), le procédé (100) comprenant :

- le positionnement (101) d'une pluralité d'oiseaux (213) sur un dispositif de déplacement (203), le dispositif de déplacement (203) étant configuré pour déplacer la pluralité d'oiseaux (213) selon une voie de déplacement prédéterminée,
- le déplacement (103) de la pluralité d'oiseaux (213) dans un bain de liquide (201) de telle sorte que la pluralité d'oiseaux (213) se trouvent simultanément dans le bain de liquide (201),
- l'application (105) d'un courant électrique de consigne prédéterminé à un oiseau respectif (213) parmi la pluralité d'oiseaux (213), en ajustant une tension d'étourdissement spécifique sur l'oiseau respectif (213), la tension d'étourdissement étant ajustée de telle sorte que l'oiseau respectif (213) soit étourdi avec le courant électrique de consigne prédéterminé pendant une période prédéterminée, et
- la tension d'étourdissement étant ajustée continuellement pendant la période prédéterminée,

**caractérisé en ce que** le procédé (100) comprend en outre :

- la validation du fait que la tête d'un oiseau respectif (213) est certainement recouverte par le liquide se trouvant dans le bain de liquide (201) après le déplacement de la pluralité d'oiseaux (213) dans le bain de liquide (201),

▪ l'autorisation de l'application de la tension d'étourdissement à l'oiseau respectif (213) uniquement dans le cas où la validation aboutit à un résultat positif,

▪ la validation aboutissant à un résultat positif lorsqu'un capteur de position détecte qu'un élément de fixation reliant l'oiseau respectif (213) au dispositif de déplacement (203) se trouve dans une position prédéterminée par rapport au bain de liquide (201).

2. Procédé (100) selon la revendication 1, **caractérisé en ce que** le procédé (100) comprend en outre :

▪ la documentation (107) d'une tension d'étourdissement appliquée à un oiseau respectif (213).

3. Procédé (100) selon la revendication 1, **caractérisé en ce que** le procédé (100) comprend en outre :

▪ l'application (109) d'une tension de mesure à un oiseau respectif (213) parmi la pluralité d'oiseaux (213),

▪ la détermination (111) d'une résistivité électrique de l'oiseau respectif (213) à l'aide de la tension de mesure appliquée à l'oiseau respectif (213), la résistivité électrique étant déterminée continuellement pendant un processus d'étourdissement et utilisée pour ajuster la tension d'étourdissement.

4. Procédé (100) selon la revendication 3, **caractérisé en ce que** la tension de mesure s'élève entre 2 volts et 12 volts, en particulier 4 volts.

5. Procédé (100) selon l'une des revendications 1 à 4, **caractérisé en ce que** la validation aboutit à un résultat positif lorsqu'une résistivité électrique d'un oiseau respectif (213), qui est déterminée à l'aide d'un courant de mesure prédéterminé appliqué à l'oiseau respectif (213) avec la tension de mesure prédéterminée, est inférieure ou supérieure à une valeur de seuil prédéterminée.

6. Procédé (100) selon l'une des revendications précédentes, **caractérisé en ce qu'**un courant d'étourdissement appliqué à un oiseau respectif (213) est ajusté avec une fréquence d'étourdissement qui est réduite à partir d'une valeur de départ pendant un processus d'étourdissement.

7. Procédé (100) selon l'une des revendications précédentes, **caractérisé en ce qu'**un courant électrique est appliqué à un oiseau respectif (213) en appliquant un courant électrique au dispositif de déplacement (203) dans une zone de contact avec l'oiseau (213).

8. Procédé (100) selon l'une des revendications précédentes, **caractérisé en ce qu'**un courant électrique est d'abord appliqué à un oiseau respectif (213) et que l'oiseau respectif (213) est ensuite déplacé, avec le courant électrique appliqué, dans le bain de liquide (201).

9. Procédé (100) selon l'une des revendications 1 à 8, **caractérisé en ce que**, pendant qu'un oiseau respectif (213) est déplacé dans le bain de liquide (201), un courant électrique est appliqué à l'oiseau respectif (213).

10. Procédé (100) selon l'une des revendications 1 à 8, **caractérisé en ce qu'**un oiseau respectif (213) est d'abord déplacé dans le bain de liquide (201) et qu'un courant électrique est ensuite appliqué à l'oiseau respectif (213).

11. Procédé (100) selon l'une des revendications précédentes, **caractérisé en ce que** le dispositif de déplacement (203) pour introduire le courant électrique et un oiseau respectif (213) ou le bain de liquide (201) sont utilisés pour dériver le courant électrique, ou que le dispositif de déplacement (203) pour dériver le courant électrique et un oiseau respectif (213) ou le bain de liquide (201) sont utilisés pour introduire le courant électrique.

12. Dispositif (200) pour étourdir une pluralité d'oiseaux, le dispositif (200) comprenant :

▪ un bain liquide (201),
▪ un dispositif de déplacement (203) configuré pour déplacer une pluralité d'oiseaux (213) sur une voie de déplacement prédéterminée de telle sorte que la tête d'un oiseau respectif (213) de la pluralité d'oiseaux (213) soit entourée par un liquide se trouvant dans le bain de liquide (201),
▪ un dispositif de contact électrique (205) configuré pour appliquer un courant électrique à un oiseau respectif (213),
▪ une unité de calcul (207) configurée pour exécuter un procédé (100) selon l'une des revendications 1 à 11.

13. Dispositif (200) selon la revendication 12, **caractérisé en ce que** le dispositif comprend un dispositif de contact électrique (205) configuré pour appliquer simultanément aux oiseaux respectifs (213) de la pluralité d'oiseaux placés dans le bain de liquide (201) une tension d'étourdissement spécifique destinée à un oiseau respectif (213), de sorte qu' une tension d'étourdissement spécifique individuelle soit appliquée à chaque oiseau individuel (213) de la pluralité d'oiseaux (213) et que la tension d'étourdissement spécifique soit documentée pour chaque oiseau individuel.

100

101

103

105

111

109

107

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3066931 B1
- DE 69215690 T2
- WO 9701284 A
- NL 2002318 C2
- EP 0680260 B1
- DE 202015101312 U1
- DE 4002266 A1